# DEMANDE DE BREVET EUROPEEN

(11) **EP 3 831 513 A1**
(43) Date de publication de la demande: **09.06.2021**
(21) Numéro de dépôt: 20216361.4
(22) Date de dépôt: 30.06.2014
(51) Int. Cl.: B22F 1/00, B29C 67/00, C22C 1/04, C22C 33/02, B22F 9/04, B22F 9/08, B22F 10/25, B22F 10/28, B22F 10/34, B33Y 10/00, B33Y 70/10, C04B 35/628, C04B 35/71

(54) **PROCÉDÉ DE FABRICATION ADDITIVE DE PIÈCES PAR FUSION OU FRITTAGE DE PARTICULES DE POUDRE(S) AU MOYEN D'UN FAISCEAU DE HAUTE ÉNERGIE AVEC DES POUDRES ADAPTÉES AU COUPLE PROCÉDÉ/MATÉRIAU VISÉ**

(62) Demande divisionnaire de: 14790118.5
(71) Demandeur: SAFRAN AIRCRAFT ENGINES, 75015 Paris (FR); Airbus Group SAS, 31700 Blagnac (FR); Airbus Helicopters, 13725 Marignane Cedex (FR)
(72) Inventeur: COLIN, Christophe, 91000 EVRY (FR); KIRSCHNER, Laëtitia, 75020 PARIS (FR)
(74) Mandataire: Cabinet Beau de Loménie

(57) **Abrégé**

L'invention concerne un procédé de fabrication rapide de pièces en matériau métallique, intermétallique, céramique, en composite à matrice céramique ou en composite à matrice métallique à renfort discontinu, notamment à renfort céramique ou intermétallique, par fusion ou frittage de particules de poudre(s) au moyen d'un faisceau de haute énergie.

De façon caractéristique, la composition de la poudre utilisée présentant au moins un élément chimique supplémentaire en quantité non nulle mais inférieure à 0,5% massique, et apte à améliorer l'absorptivité dudit matériau céramique vis-à-vis de la radiation émise par le faisceau de haute énergie par rapport au cas où cet élément chimique supplémentaire est absent de la composition de la poudre.

Application à la fabrication rapide de pièces par fusion sélective par laser (« *Selective Laser Melting »* ou SLM) ou par frittage sélectif par laser (« Selective Laser Sintering » ou SLS) ou encore par projection laser (*« Direct Metal Déposition* » ou DMD). De telles poudres sont adaptées au couple procédé/matériau visé.

## Description

La présente invention concerne le domaine de la fabrication de pièces en matériau métallique, intermétallique, céramique, en Composite à Matrice Céramique (CMC) ou en Composite à Matrice Métallique (CMM) à renfort discontinu, notamment à renfort céramique ou intermétallique, par fusion ou frittage de particules de poudre(s) au moyen d'un faisceau de haute énergie.

On entend par renfort discontinu, des éléments de renfort tels que des fibres courtes (whiskers ou trichites), des particules, en particulier monocristallines, et non des éléments de renfort continu de type fibres longues.

Parmi ces faisceaux de haute énergie, on peut mentionner notamment, de façon non limitative, le faisceau laser et le faisceau d'électrons. Concernant le laser, il peut être soit pulsé, soit continu.

L'invention vise en particulier la fabrication rapide de pièces par projection laser ou par fusion sélective de lits de poudre par laser ou encore par frittage sélectif de lits de poudre par laser.

Par « frittage sélectif par laser », en anglais « *Selective Laser Sintering »* (SLS), on entend un procédé dans lequel une partie de la poudre est fondue, l'autre partie restant solide. Cela concerne en particulier la fabrication de pièces en matériau céramique, en CMC et pour certains CMM. Pour les deux premiers matériaux (céramique et CMC), la phase liquide est minoritaire (le plus souvent entre 0,5 et 3 %vol.) et pour les CMM cette phase liquide est majoritaire mais rarement inférieure à 70% en volume.

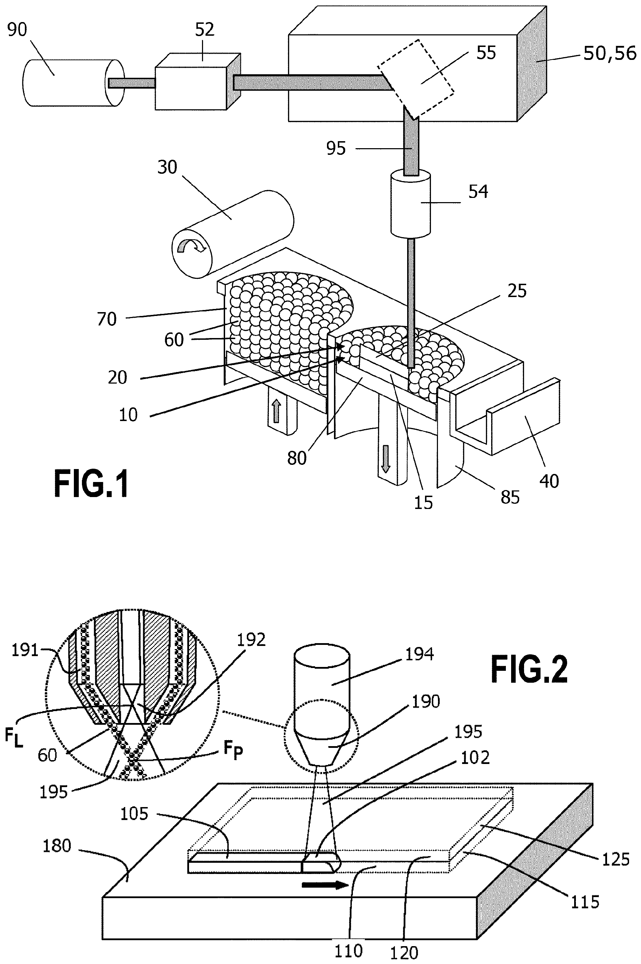

Par « fusion sélective par laser », en anglais « *Selective Laser Melting»* (SLM), on entend un procédé dont l'entièreté de la poudre est fondue et dont les caractéristiques principales sont rappelées ci-après, en référence à la figure 1.

On dépose, par exemple à l'aide d'un rouleau 30 (ou tout autre moyen de dépose), une première couche 10 de poudre d'un matériau sur un support de construction 80 (il peut s'agir d'un support massif, d'une partie d'une autre pièce ou d'une grille support utilisée pour faciliter la construction de certaines pièces).

Cette poudre est transvasée sur le support de construction 80 depuis un bac d'alimentation 70 lors d'un mouvement aller du rouleau 30 puis elle est raclée, et éventuellement légèrement compactée, lors d'un (ou de plusieurs) mouvement(s) de retour du rouleau 30. La poudre est composée de particules 60. L'excédent de poudre est récupéré dans un bac de recyclage 40 situé de façon adjacente au bac de construction 85 dans lequel se déplace verticalement le support de construction 80.

On utilise également un générateur 90 de faisceau laser 95, et un système de pilotage 50 apte à diriger ce faisceau 95 sur n'importe quelle région du support de construction 80 de façon à balayer n'importe quelle région d'une couche de poudre. La mise en forme du faisceau laser et la variation de son diamètre sur le plan focal se font respectivement au moyen d'un dilatateur de faisceau ou « Beam Expander » 52 et d'un système de focalisation 54, l'ensemble constituant le système optique.

Ensuite, on porte une région de cette première couche 10 de poudre, par balayage avec un faisceau laser 95, à une température supérieure à la température de fusion T_{F} de cette poudre.

Le procédé SLM peut utiliser n'importe quel faisceau de haute énergie à la place du faisceau laser 95, tant que ce faisceau est suffisamment énergétique pour fondre les particules de poudre et une partie du matériau sur lequel les particules reposent (encore appelée zone diluée faisant partie intégrante du bain liquide).

Ce balayage du faisceau est effectué par exemple par une tête galvanométrique faisant partie d'un système de pilotage 50. Par exemple ce système de pilotage comprend à titre non limitatif au moins un miroir 55 orientable sur lequel le faisceau laser 95 se réfléchit avant d'atteindre une couche de poudre dont chaque point de la surface se trouve situé toujours à la même hauteur par rapport à la lentille de focalisation, contenue dans le système de focalisation 54, la position angulaire de ce miroir étant pilotée par une tête galvanométrique pour que le faisceau laser balaye au moins une région de la première couche de poudre, et suive ainsi un profil de pièce préétabli. Pour ce faire, la tête galvanométrique est commandée selon les informations contenues dans la base de données de l'outil informatique utilisé pour la conception et la fabrication assistées par ordinateur de la pièce à fabriquer.

Ainsi, les particules de poudre 60 de cette région de la première couche 10 sont fondues et forment un premier élément 15 d'un seul tenant, solidaire avec le support de construction 80. A ce stade, on peut également balayer avec le faisceau laser plusieurs régions indépendantes de cette première couche pour former, après fusion et solidification de la matière, plusieurs premiers éléments 15 disjoints les uns des autres.

On abaisse le support 80 d'une hauteur correspondant à l'épaisseur de la première couche (20 à 100 µm et en général de 30 à 50 µm).

On dépose ensuite une deuxième couche 20 de poudre sur la première couche 10 et sur ce premier élément d'un seul tenant ou consolidé 15, puis on chauffe par exposition au faisceau laser 95 une région de la deuxième couche 20 qui est située partiellement ou complètement au-dessus de ce premier élément d'un seul tenant ou consolidé 15 dans le cas illustré à la figure 1, de telle sorte que les particules de poudre de cette région de la deuxième couche 20 sont fondues avec au moins une partie de l'élément 15 et forment un deuxième élément d'un seul tenant ou consolidé 25, l'ensemble de ces deux éléments 15 et 25 formant, dans le cas illustré à la figure 1, un bloc d'un seul tenant.

On comprend que selon le profil de la pièce à construire, et notamment dans le cas de surface en contre-dépouille, il se peut que la région précitée de la première couche 10 ne se trouve pas, même partiellement, en dessous de la région précitée de la deuxième couche 20, de sorte que dans ce cas le premier élément consolidé 15 et le deuxième élément consolidé 25 ne forment alors pas un bloc d'un seul tenant.

On poursuit ensuite ce processus de construction de la pièce couche par couche en ajoutant des couches supplémentaires de poudre sur l'ensemble déjà formé.

Le balayage avec le faisceau laser 95 permet de construire chaque couche en lui donnant une forme en accord avec la géométrie de la pièce à réaliser. Les couches inférieures de la pièce se refroidissent plus ou moins vite au fur et à mesure que les couches supérieures de la pièce se construisent.

Le procédé de dépôt par « projection laser » ou DMD (en anglais « *Direct Metal Déposition* ») est expliqué ci-dessous en référence à la figure 2.

On forme par projection de particules de poudre 60, sous gaz inerte, une première couche 110 de matériau sur un support de construction 180, au travers d'une buse 190. Cette buse 190 véhicule, simultanément à la projection de particules 60 de poudre, un faisceau laser 195 qui provient d'un générateur 194. Le premier orifice 191 de la buse 190 par lequel la poudre est projetée sur le support de construction 180 est coaxial au second orifice 192 par lequel le faisceau laser 195 est émis, de telle sorte que la poudre est projetée dans le faisceau laser 195. On entend donc par buse coaxiale un faisceau poudre concentrique au faisceau laser avec l'alignement du point Focal Laser (F_{L}) et du point Focal Poudre (F_{P}) sur l'axe de symétrie de la buse 190 (le point Focal Laser (F_{L}) étant réglable par rapport au point Focal Poudre (F_{P})). La poudre forme une enveloppe conique, et le faisceau laser est de forme conique. Le faisceau laser 195 porte la poudre à une température supérieure à sa température de fusion T_{F}, de telle sorte que cette poudre forme un bain 102 sur la surface du support 180 sous le faisceau laser 195. Le bain 102 peut également avoir commencé à être formé sur le support 180 par fusion de la région du support 180 exposée au faisceau laser 195, sur une certaine profondeur : dans ce cas la poudre alimente le bain 102 dans lequel elle parvient à l'état totalement fondu.

Alternativement, la position de la buse 190 peut être réglée par rapport à la position du faisceau laser de telle sorte que la poudre ne passe pas par exemple suffisamment de temps dans le faisceau laser 195 ou que la vitesse des particules de poudre en sortie de buse soit trop importante ou que ce faisceau laser ne soit pas suffisamment énergétique pour que les particules de poudre soient complètement fondues en amont du bain, et fondent totalement après seulement avoir atteint le bain 102 préalablement formé sur la surface du support 180 par fusion de la région de ce support 180 exposée au faisceau laser 195.

La poudre peut également, en amont du bain, ne pas être fondue par le faisceau laser 195 ou ne l'être que partiellement parce que la taille de certaines particules constitutives de la poudre est trop importante ou que leur débit massique est trop grand pour qu'elles soient totalement fondues avant d'arriver dans le bain.

Enfin, la poudre peut ne pas être portée en température avant d'arriver alors froide dans le bain préalablement formé sur la surface du support 180 car le réglage de la buse 190 par rapport au faisceau laser est tel qu'il n'y a aucune intersection entre le faisceau poudre et le faisceau laser au droit du plan de travail.

Tandis que l'ensemble formé de la buse 190 et du faisceau laser 195 (ou le support 180) se déplace vers l'aval, le bain 102 est entretenu et se solidifie de proche en proche pour former un premier cordon de matière solidifiée 105 sur le support 180. On poursuit le processus pour former un autre cordon solidifié sur le support 180, cet autre cordon étant par exemple juxtaposé et parallèle au premier cordon.

Ainsi, par déplacement de l'ensemble formé de la buse 190 et du faisceau laser 195, ou du support 180, on dépose sur le support 180 une première couche 110 de matière qui forme en se solidifiant un premier élément 115 d'un seul tenant dont la géométrie est conforme à celle définie par les informations contenues dans la base de données de l'outil informatique utilisée pour la conception et la fabrication assistées par ordinateur de la pièce à fabriquer.

On effectue ensuite un second balayage de la buse 190, afin de former de façon similaire une deuxième couche 120 de matière sur le premier élément 115 précédemment consolidé. Cette deuxième couche 120 forme un deuxième élément consolidé 125, l'ensemble de ces deux éléments 115 et 125 formant un bloc d'un seul tenant. Les bains 102 formés de proche en proche sur le premier élément 115 lors de la construction de cette deuxième couche 120 comprennent en général au moins une partie du premier élément 115 qui a été refondue par exposition au faisceau laser 195 (encore appelée zone diluée faisant partie intégrante du bain liquide), et les particules de la poudre alimentent les bains 102.

On poursuit ensuite ce processus d'élaboration de la pièce couche par couche en ajoutant des couches supplémentaires sur l'ensemble déjà formé.

Le balayage avec le faisceau laser 195 permet de donner à chaque couche une forme indépendante des couches adjacentes. Les couches inférieures de la pièce se refroidissent plus ou moins vite au fur et à mesure que l'on forme les couches supérieures de la pièce.

Alternativement ou cumulativement, on peut dissocier la trajectoire de la poudre de celle du faisceau laser et créer d'une part un bain de fusion très localisé dans les couches précédentes, par action du faisceau laser qui peut être réglé de façon très précise par rapport au plan de travail, et d'autre part injecter au moyen d'une buse latérale de la poudre dans ce bain de fusion.

Par ailleurs, les techniques précitées par fabrication rapide de pièces ne sont pas limitatives et en particulier le frittage sélectif par laser, en anglais « Selective Laser Sintering » (SLS), peut ici être considéré : dans ce cas, tout ou partie des particules de poudre reste à une température inférieure à la température de fusion T_{F} de cette poudre.

Afin de diminuer la contamination de la pièce, par exemple en oxygène, en oxyde(s) ou en un autre polluant lors de sa fabrication couche par couche telle que décrite ci-dessus, cette fabrication doit être entre autre effectuée dans une enceinte à degré d'hygrométrie et à teneur en oxygène contrôlées et adaptées au couple procédé/matière.

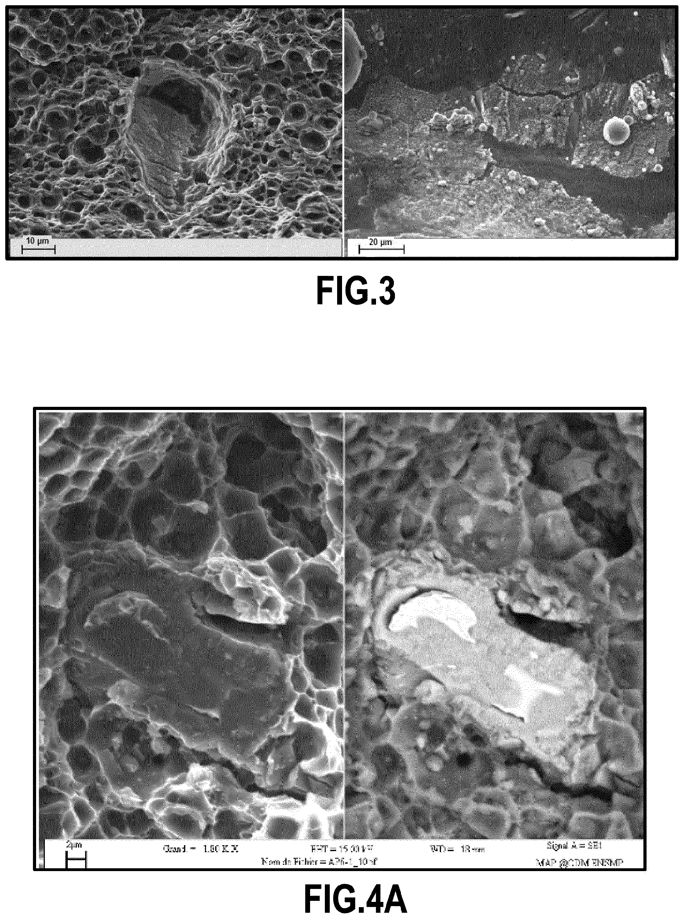

A titre d'exemple, comme on peut le voir sur les micrographies de la figure 3, un film d'oxyde(s) se forme avec un dégagement d'hydrogène à l'intérieur de porosités (gaz occlus) au sein d'un alliage d'aluminium fusionné selon la réaction:

2 Al_{(liquide)} + 3 H₂O₍ᵥₐₚₑᵤᵣ₎→ Al₂O_{3(solide)} + 3 H_{2(gaz)},

lorsqu'on utilise par exemple le procédé de fusion sélective par laser sans un contrôle drastique du point de rosée de l'atmosphère environnante (en l'espèce le rapport entre les pressions partielles de H₂ et de H₂O correspondant à une quantité de vapeur d'eau). Par exemple, à un point de rosée de -50°C est associée une teneur en vapeur d'eau de 38,8 ppm.

Afin d'éviter toute contamination par l'oxygène résiduel, l'enceinte est remplie d'un gaz neutre (non réactif) vis-à-vis du matériau considéré tel que l'azote (N₂), l'argon (Ar), le monoxyde de carbone (CO), le dioxyde de carbone (CO₂), ou l'hélium (He) avec ou non addition d'une faible quantité d'hydrogène (H₂) connu pour son pouvoir réducteur. Un mélange d'au moins deux de ces gaz peut être aussi considéré. Pour empêcher la contamination, notamment par l'oxygène du milieu environnant, il est d'usage de mettre cette enceinte en surpression.

Ainsi selon l'état de l'art actuel, la fusion sélective par laser ou la projection laser permet de construire avec une bonne précision dimensionnelle des pièces faiblement polluées dont la géométrie en trois dimensions peut être complexe mais dont la tenue mécanique est encore insuffisante pour certaines applications et donc nécessite une meilleure optimisation du procédé et en particulier une meilleure optimisation de la constitution des poudres.

La fusion sélective par laser ou la projection laser utilise en outre et de préférence une poudre composée de particules de morphologie sphérique, de composition homogène, propres (i.e non contaminées par des éléments résiduels provenant de la synthèse de la poudre) et fines (la dimension de chaque particule est comprise entre 1 et 100 µm et de préférence entre 1 et 50 µm voire entre 1 et 25 µm), ce qui permet d'obtenir un excellent état de surface de la pièce finie.

La fusion sélective par laser ou la projection laser permet par ailleurs une diminution des délais de fabrication, des coûts et des frais fixes, par rapport à une pièce moulée, injectée, compactée et frittée, corroyée ou usinée dans la masse.

Les pièces élaborées par fusion sélective par laser ou par projection laser présentent cependant des inconvénients.

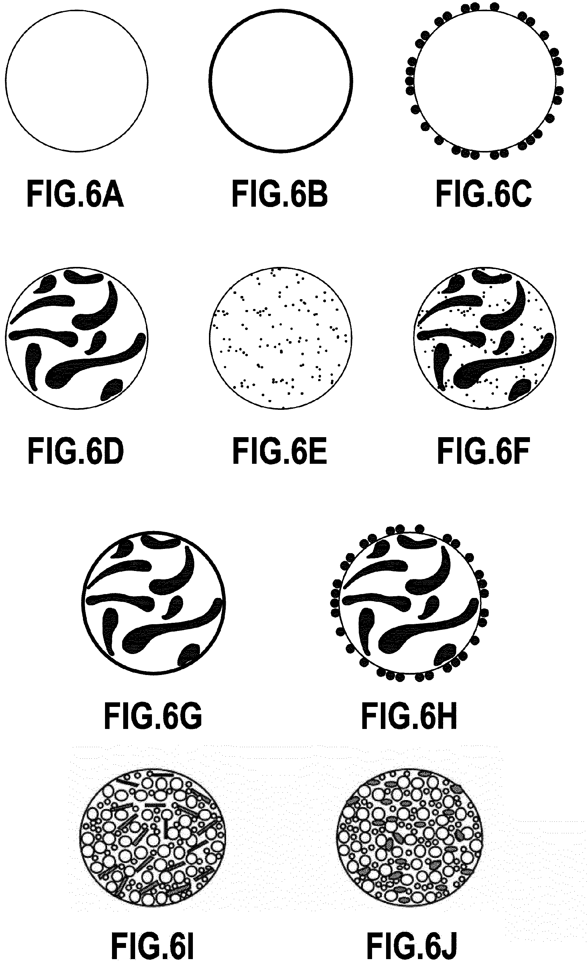

La pratique courante consiste à utiliser lorsque c'est possible une poudre pré-alliée (figure 6A) à particules mono-composantes, de forme sensiblement sphérique (ou quasi-sphérique), denses (absence de porosité intra-particulaire, c'est-à-dire absence de gaz occlus dans la particule), non contaminées et non oxydées en surface, dont la composition est homogène, c'est-à-dire la même en tout volume élémentaire de la particule, et identique à celle visée pour la pièce issue du procédé de fusion de particules de poudre. Dans ce cas, les particules sont formées de matière continue, de composition homogène et sont, selon l'invention, quasi-sphériques et denses. Elles peuvent être composées d'un seul élément chimique (poudre mono-élément), soit de plusieurs éléments chimiques (poudre multi-éléments).

Cependant, on est parfois contraint à utiliser un mélange de plusieurs types de poudre(s) dont la morphologie, la densité (ou masse volumique), la taille moyenne, la distribution en taille, la composition, l'homogénéité chimique, la contamination en oxygène en surface et en volume, l'état d'agglomération, la surface spécifique, la coulabilité, en d'autres termes la constitution ou l'architecture de ces poudres, ainsi que leur coût, doivent être adaptés aux spécificités de ces procédés de fabrication rapide afin de satisfaire le cahier des charges des pièces fabriquées.

L'utilisation d'un mélange en vrac (non aggloméré) de plusieurs types de poudres de composition différente, et notamment des poudres facilement disponibles sur le marché, permet d'obtenir rapidement et à un coût moindre la composition moyenne souhaitée, soit en utilisant des poudres dont les particules sont composées d'un seul élément chimique (poudre mono-élément), soit en utilisant des poudres dont les particules sont composées de plusieurs éléments chimiques (poudre multi-éléments), soit en ayant recours à ces deux catégories de poudre.

Toutefois, l'utilisation d'un tel mélange en vrac de plusieurs types de poudre pose un certain nombre de problèmes.

Notamment, l'écoulement ou fluidité d'un tel mélange en vrac de poudres de composition différente s'avère difficile à travers le ou les distributeurs de poudres et à travers la buse dans le cas du procédé DMD. Qui plus est, dans le cas du procédé SLM, c'est la dépose et l'étalement homogène du lit de poudres qui se trouvent affectés par l'emploi d'un tel mélange en vrac de poudres.

En outre, en utilisant un mélange de plusieurs types de poudres (poudre(s) mono-élément(s) et/ou poudre(s) multi-éléments), il n'est pas aisé d'avoir une fusion homogène de toutes les particules de ces poudres. En effet, les particules de chacune de ces poudres présentent une température de fusion intrinsèque de sorte qu'il existe parfois un écart significatif entre leurs températures de fusion.

De ce fait, il existe un risque avéré de ne pas pouvoir réaliser, dans le temps imparti correspondant à la durée de l'interaction laser/matière, un bain de fusion, de composition homogène et conforme à celle visée dans lequel l'ensemble des particules des poudres en présence sont parfaitement dissoutes, à défaut de pouvoir augmenter entre autres la puissance laser ou diminuer la vitesse de balayage et ainsi accroître la température et/ou le volume du bain sans mettre à mal sa stabilité et ainsi la stabilité de construction.

Selon la réactivité de ces différentes poudres du mélange, la formation d'intermétalliques fragiles peut également survenir, à l'origine bien souvent de ruptures des pièces brutes de fabrication.

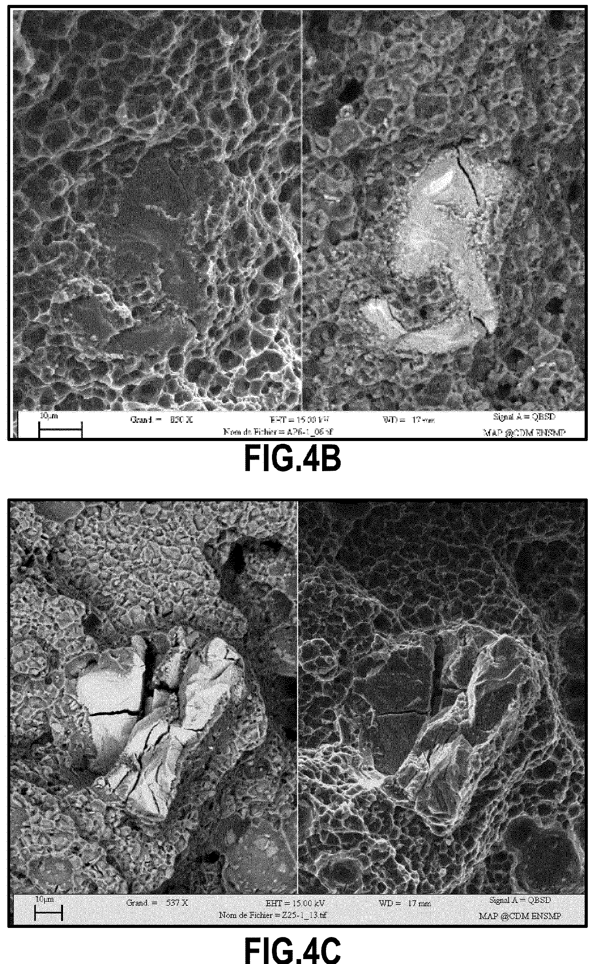

Cette situation est illustrée sur les micrographies des figures 4A à 4C montrant des faciès de rupture d'éprouvettes obtenues à partir d'une première poudre en alliage AlSi10Mg complétée par une faible proportion volumique d'une deuxième poudre constituée de particules réactives et réfractaires de différentes compositions (à base de fer et de chrome pour la figure 4A, de nickel, de chrome et de cobalt pour la figure 4B et à base de fer, de nickel et de chrome pour la figure 4C), réalisées au microscope électronique à balayage selon des réglages différents de sorte qu'une des deux vues de chaque micrographie fait ressortir la topographie (image en électrons secondaires, désignée par SE) et l'autre vue fait ressortir les différences de composition chimique (image en électrons rétro-diffusés, désignée par BSE). Les particules les plus grosses de la deuxième poudre n'ayant pas pu être mises en solution elles ont formé des inclusions intermétalliques, à l'origine de la rupture des éprouvettes.

Le phénomène décrit précédemment peut être accentué par une large répartition granulométrique de la deuxième poudre et par une taille moyenne importante pour la deuxième poudre, présentant la température de fusion la plus élevée parmi les différentes poudres composant le mélange réactif.

Egalement, du fait de tailles de particules semblables, de taille moyenne importante et de températures de fusion très différentes entre les différentes poudres du mélange considérées ici comme non réactives mais solubles, on peut rencontrer dans le cas de ces procédés de fusion, des particules non totalement fondues et/ou dissoutes dans le liquide qui surnagent pour les plus grosses à la surface du bain. Il peut notamment s'agir de particules de matériau réfractaire tel que des intermétalliques ou des céramiques.

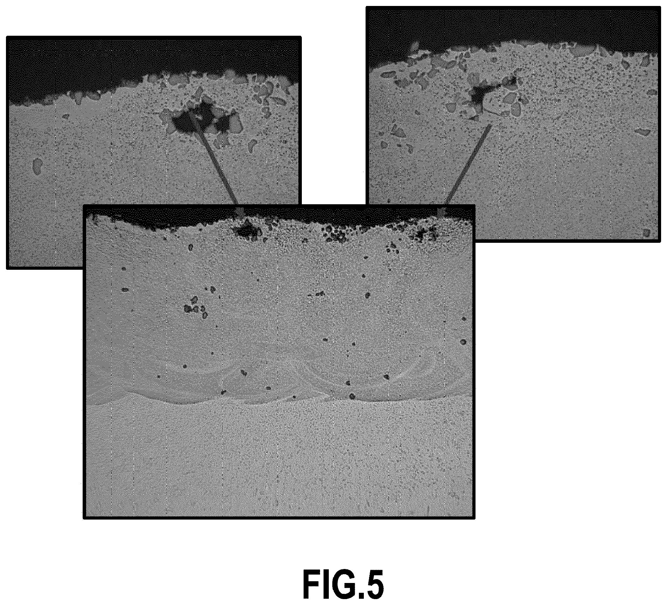

A titre d'exemple illustrant cette situation, les micrographies de la figure 5 concernent le cas d'une pièce en acier renforcé par des particules en carbure de titane dans laquelle certaines de ces particules de la poudre la plus réfractaire du mélange n'ont pas été complètement mises en solution dans le bain liquide, et de ce fait se sont concentrées à la surface du bain, encerclant et piégeant parfois même des poches de gaz.

Cette situation est d'autant plus marquée que les particules, notamment réfractaires, présentent une faible masse volumique comparée aux autres poudres du mélange et sont en proportion volumique non négligeable. Ces infondus, après solidification du bain liquide, peuvent entraver l'adhésion de la couche suivante ou la mise en couche suivante et même être à l'origine de défauts de fabrication (porosité macroscopique) si la taille et la fraction volumique de ces infondus sont importantes. En effet, ces infondus constituent des inclusions dures dans une matrice ductile et concourent ainsi à la rupture prématurée des pièces fabriquées.

Par ailleurs, la mise en solution, parfois incomplète voire retardée dans le temps, de ces différents types de poudres peut mener très localement lors du refroidissement à des phénomènes de ségrégation chimique (cas d'un mélange de poudres non réactives) conduisant à des phases eutectiques à bas point de fusion et/ou à des réactions chimiques non souhaitées entre ces dernières (cas d'un mélange de poudres réactives) conduisant à la présence de phases dures (par exemple des phases intermétalliques, telles que celles des figures 4A, 4B, et 4C) non désirées, ce qui amène à l'obtention d'une microstructure du matériau brut de fabrication ne correspondant pas à celle souhaitée in fine et présentant des propriétés de résistance mécanique inférieures à celles souhaitées pour l'application considérée ainsi qu'un risque de brûlure à l'issue d'un post-traitement thermique.

Egalement, si les différentes poudres du mélange non réactif ne sont pas suffisamment mouillables entre elles, dues entre autres à l'absence totale d'une solubilité entre ces poudres, la « bonne santé matière » des pièces ne sera alors pas atteinte.

La présente invention a pour objectif de fournir un procédé de fabrication d'une pièce de composition et microstructure souhaitées dans un matériau métallique, intermétallique, céramique, Composite à Matrice Céramique (CMC) ou en Composite à Matrice Métallique (CMM) à renfort discontinu, par fusion de particules de poudre(s) au moyen d'un faisceau de haute énergie, qui permette de surmonter les inconvénients de l'art antérieur.

L'invention est définie par la revendication 1. Les revendications dépendantes définissent des modes de réalisation préférés.

En particulier, par le présent exposé, on vise à obtenir une composition homogène de la pièce conforme à la composition désirée, l'absence de défauts de fabrication, une macro- et microstructure (taille et morphologie des grains puis morphologie, finesse et composition des phases) adaptées dès le brut de fabrication (à l'issue de l'étape de fabrication par fusion), une bonne qualité dimensionnelle (assurée par une parfaite stabilité du bain), une minimisation des contraintes résiduelles, un rendement massique total du procédé (fusion+recyclage) le plus grand possible et une vitesse de fabrication optimale ou temps de fabrication optimal, et ce quels que soient les matériaux envisagés.

Ce but est atteint grâce au fait que la poudre utilisée est une unique poudre dont les particules présentent une sphéricité entre 0,8 (correspondant à un cube) et 1,0 (correspondant à une sphère) et un facteur de forme entre 1 (correspondant à une sphère) et √2 (correspondant à un cube), chaque particule de poudre présentant une composition moyenne sensiblement identique et en ce que la répartition granulométrique des particules de ladite poudre est resserrée autour de la valeur de diamètre moyen d_{50%} de sorte que : (d_{90%} - d_{50%}) /d_{50%}≤ 0,66 et (d_{50%} - d_{10%}) /d_{50%}≤ 0,33 avec (d_{90%} - d_{10%}) /d_{50%}≤ 1,00.

De préférence, cette répartition granulométrique des particules, définie par la valeur de « span », (d_{90%} - d_{10%}) /d_{50%}, doit être inférieure ou égale à 0,50 avec (d_{90%} - d_{50%}) /d_{50%}≤ 0,33 et (d_{50%} - d_{10%}) /d_{50%}≤ 0,17.

On entend par sphéricité, le facteur de sphéricité (un nombre sans dimension) tel que définie par Wadell comme suit : le rapport entre la surface de la sphère de même volume que la particule et la surface de la particule en question (ψᵥ), équivalent encore au carré du rapport entre le diamètre équivalent en volume et le diamètre équivalent en surface.

De préférence, ce facteur de sphéricité est supérieur à 0,82, avantageusement supérieur à 0,85, et encore plus avantageusement supérieur à 0,90 avec une situation encore plus avantageuse lorsque ce facteur de sphéricité est supérieur à 0,95.

Avantageusement, toutes les particules de l'unique poudre utilisée selon l'invention, présentent un facteur de forme entre 1 (correspondant à une sphère) et √2 (correspondant à un cube). Ce facteur de forme, qui donne une bonne indication de l'élancement des particules, est défini comme le rapport entre diamètre de Féret maximum (distance maximale entre deux tangentes parallèles à des côtés opposés de la particule) et le diamètre de Féret minimum (distance minimale entre deux tangentes parallèles à des côtés opposés de la particule).

De préférence, ce facteur de forme est inférieur à 1,3, avantageusement inférieur à 1,25, et encore plus avantageusement inférieur à 1,15 avec une situation encore plus avantageuse lorsque ce facteur de forme est inférieur à 1,05.

Dans le présent texte, le terme « particule » correspond à une entité physique isolée des autres entités physiques de la poudre considérée et peut correspondre à différentes situations parmi lesquelles celles des figures 6A à 6J.

Ainsi, selon l'invention, on n'utilise pas un mélange en vrac (particules de poudres non liées) de deux ou plus de deux poudres différentes.

En effet, selon l'invention, on utilise une unique poudre dont les « particules » (qui sont éventuellement des macro-particules isolées les unes des autres) présentent toutes en moyenne la même composition.

Il convient donc de noter que la composition moyenne identique de toutes les « particules » de la poudre unique utilisée selon le procédé de la présente invention, correspond à une composition chimique proche ou identique à celle du matériau que l'on vise à obtenir dans la pièce issue du procédé de fabrication additive.

De cette façon, en n'utilisant pas un mélange en vrac de plusieurs poudres c'est-à-dire par l'emploi d'une poudre unique, on évite la présence de particules isolées de ces différentes poudres du mélange, dont les températures de fusion sont différentes, voire très différentes, et/ou dont les tailles moyennes et distributions de tailles peuvent ne pas être équivalentes et/ou dont la finesse de chacune des poudres du mélange rend délicat l'obtention d'un mélange homogène, et/ou dont les masses volumiques sont différentes, voire très différentes, et/ou dont la proportion volumique de l'une de ces différentes poudres est faible par rapport aux autres.

Pour la fabrication de pièces en CMM à partir d'un mélange de poudres, il est apparu clairement aux inventeurs la nécessité de disposer d'une poudre unique ayant à la fois une bonne coulabilité (assurée par une poudre grossière et sphérique) et une mise en solution rapide entre particules élémentaires, par exemple céramiques et métalliques (assurée par de fines particules élémentaires et de préférence celles du matériau réfractaire). Toutefois, l'emploi de fines particules élémentaires pour chacune des poudres du mélange s'avère délicat en raison d'un risque prononcé d'agglomération lors du mélangeage. En effet, de par les forces d'adhésion entre particules élémentaires qui augmentent avec une diminution de leurs tailles, ces forces peuvent devenir supérieures à la force de la pesanteur. Qui plus est, de fines particules élémentaires favorisent la concentration de charges électrostatiques génératrices d'explosion de poussières. Or, plus la taille des particules élémentaires de ce mélange est faible, plus la dissolution est facile et plus l'ensemble présente des propriétés homogènes. Aussi, l'emploi de macro-particules constituées d'un mélange homogène de fines particules élémentaires liées entre elles par un liant et provenant de différentes poudres est incontournable.

Selon l'invention, on passe donc par une poudre unique de composition adaptée qui forme une poudre pré-alliée pris au sens large (poudre mono-composant, (poudres atomisées, poudres enrobées, poudres malaxées, poudres malaxées et broyées, poudres incrustées,...) ou poudre multi-composants (poudres agglomérées,..)), dont les « particules » présentent un haut degré de sphéricité (sphéricité supérieure à 0,7, de préférence supérieure à 0,8 et avantageusement supérieure à 0,9).

Lors de la mise en œuvre des procédés de synthèse de cette poudre unique, on sera vigilant afin que les « particules » soient exemptes de gaz occlus et soient non contaminées en certains éléments chimiques ou tout du moins que ces éléments soient en dessous de teneurs rédhibitoires pour l'application visée.

Dans certains cas, il conviendra de recourir à l'utilisation d'une enceinte de fabrication additive sous atmosphère contrôlée (en pression partielle d'oxygène et en vapeur d'eau), en légère surpression ou de préférence en légère dépression régulée.

Lorsque cela est possible, les « particules » de cette poudre unique sont mono-composantes c'est-à-dire constituées d'un seul composant, à savoir formées d'une matière continue de composition homogène (figure 6A) ou de composition hétérogène, c'est-à-dire non homogène, à l'échelle de la « particule » (figures 6B, 6C, 6D, 6E, 6F, 6G et 6H).

De préférence, la poudre utilisée est obtenue par atomisation ou par centrifugation (en particulier par électrode tournante) d'un alliage mère et sa composition est alors homogène à l'échelle de la particule mais pas nécessairement à l'échelle de la microstructure.

Par exemple, et de façon préférentielle si sa température de fusion, sa composition chimique et sa réactivité le permettent, la poudre pré-alliée constituée de « particules » mono-composantes formées d'une matière continue de composition homogène à l'échelle de la « particule », composée d'un seul élément chimique (poudre mono-élément) ou le plus souvent de plusieurs éléments chimiques (poudres multi-éléments), de morphologie sphérique ou quasi-sphérique (figure 6A) et utilisée selon le procédé de la présente invention est obtenue par atomisation gazeuse (« *Gas Atomization* » en anglais) ou par centrifugation du type électrode tournante (« *Rotating Electrode Process* » en anglais) d'un alliage mère en rotation et en fusion à partir duquel des gouttelettes se forment et se refroidissent en vol dans une enceinte sous atmosphère protectrice ou neutre, pour former les particules de la poudre. Un tel alliage mère est par exemple métallique.

Après récupération de gouttelettes solidifiées aux bas de ces appareils, les plus fines provenant de cyclones séparateurs du dispositif d'atomisation, un tri sélectif de ces gouttelettes est assuré dans un premier temps par tamisage assisté par vibration pneumatique pour une certaine gamme de taille dans la limite des 30 à 40 µm et dans un second temps par élutriation (turbine à air ou à gaz) pour les particules les plus fines dans la limite des 1 µm.

Un autre cas approchant du cas précédent diffère seulement par le fait que les « particules » mono-composantes de la poudre unique pré-alliée (à savoir, particules multi-éléments formées de matière continue), présentent une composition hétérogène à l'échelle de la « particule ».

Ces poudres pré-alliées peuvent être produites par différents procédés ou combinaison de différents procédés de synthèse, notamment des procédés reposant sur un traitement mécanique ou thermo-mécanique en voie sèche, voie humide ou sous gaz inerte (en particulier par broyage conventionnel au moyen de billes, de boulets, de couteaux, de marteaux, de disques ou de galets,... ou par co-broyage à plus ou moins haute énergie et de préférence entre une poudre céramique et une poudre métallique à l'aide d'un broyeur planétaire à billes de haute énergie (broyage par mécano-synthèse) ou encore pour des applications très spécifiques par broyage cryogénique, broyage réactif entre particules solides réactives ou particules solides et gaz réactif ou par mécanofusion), un traitement chimique ou thermo-chimique (notamment par revêtement CVD « *Chemical Vapor Deposition »,* PECVD ou PACVD « *Plasma Enhanced (Assisted) Chemical Vapor Deposition »* et OMCVD « *Organo-Metallic Chemical Vapor Déposition »* en anglais), ou une synthèse réactive (notamment par combustion auto-propagée plus connue sous le sigle SHS « *Self-propagating High temperature Synthesis* » en anglais).

Rappelons que contrairement à l'atomisation au gaz et à la centrifugation d'un alliage métallique qui donnent des particules très sphériques et de grande pureté chimique, le broyage mécanique ou thermo-mécanique ou encore la mécano-synthèse de poudres métalliques de préférence introduisent des impuretés provenant des éléments de broyage et ne permettent pas de contrôler rigoureusement la morphologie et la taille des particules. Toutefois, la morphologie des particules est généralement isotrope et assez bien sphérique.

On obtient alors différents types de poudres pré-alliées dont les « particules » sont mono-composantes de composition hétérogène à l'échelle de la « particule » telle que celles visibles sur les figures 6B à 6H.

Selon une possibilité avantageuse, la poudre utilisée est obtenue par enrobage ou incrustation.

Sur la figure 6B est montrée une telle particule de poudre pré-alliée formée par une particule mono- ou multi-éléments de composition homogène enrobée ou revêtue, dont le cœur est continu et réalisé en un premier matériau et dont l'enveloppe est continue, réalisée en un deuxième matériau de composition différente du premier, et déposée par exemple sous vide en phase vapeur par voie chimique (dépôt CVD) ou par voie physique (dépôt PVD, « Physical Vapor Deposition ») ou par un traitement thermo-chimique en lits fluidisés voie sèche ou voie humide ou encore par un traitement thermo-mécanique du type mécanofusion.

Le revêtement métallique par mécanofusion de particules dures permettra d'améliorer la ductilité et la ténacité de CMM à forte fraction volumique de renforts céramiques non-oxydes (carbures, nitrures, siliciures et borures) ou intermétalliques car pour de telles fractions volumiques la fusion d'un tel revêtement métallique au moyen d'un faisceau de haute énergie facilite grandement sa répartition entre les renforts céramiques qui restent solides. Signalons que le revêtement des particules pré-alliées par ces mêmes procédés de synthèse précités peut être du type multicouche.

Selon une autre possibilité avantageuse, la poudre utilisée est obtenue par broyage/malaxage, à savoir par broyage/malaxage mécanique par impacts ou attrition (usure par frottement) ou par cisaillement ou compression ou encore combinaison de deux ou plusieurs de ces efforts. La taille moyenne finale des particules dépend de la technique de broyage utilisée, des caractéristiques des éléments broyants (type de matériau, forme, taille), du temps de broyage, du milieu de broyage (broyage à sec avec ou sans atmosphère contrôlée, en milieu aqueux ou non aqueux, avec ou sans dispersant), du rapport de charge (masse des éléments broyants sur masse de poudre) et de la vitesse de rotation des éléments broyants et/ou de la jarre.

La figure 6C illustre le cas d'une particule de poudre pré-alliée obtenue par incrustation. En particulier, on réalise l'incrustation de fines particules dures d'une première poudre à la surface de particules ductiles mono- ou multi-éléments de composition homogène de bien plus grande taille issues d'une deuxième poudre pré-alliée. Un des moyens de parvenir à ce résultat est la mécano-synthèse («*mechanical alloying*» en anglais) consistant à mélanger à haute énergie dans les proportions volumiques désirées une deuxième poudre fine de dureté élevée avec une première poudre ductile et grossière. Ceci peut être assuré par attrition et/ou sous l'impact de billes au moyen d'un broyeur planétaire. L'énergie libérée se fait par une rotation opposée du récipient de broyage (jarre) et du disque support sous éventuellement un gaz protecteur. Par exemple, la particule de poudre pré-alliée qui est visible sur la figure 6C, est constituée d'un cœur en alliage métallique Ti6Al4V de composition homogène, et d'une enveloppe formée de fines particules élémentaires céramiques (par exemple TiB₂ ou TiC) ou non métalliques (par exemple B pour bore) qui se sont incrustées à la surface du Ti6Al4V.

La figure 6D illustre le cas d'une particule de poudre pré-alliée de type dispersée mais dont la matière est continue et obtenue à partir du malaxage intime de deux ou plusieurs particules de poudres originelles de composition chimique différente, comportant de préférence des alliages métalliques ductiles, constitués de multi-éléments : par exemple sur la figure 6D, on distingue les parties, respectivement claires et foncées, des deux poudres originelles dont les particules de composition homogène mais différente se sont déformées plastiquement et liées maintes fois entre elles pour former la particule de poudre pré-alliée de la figure 6D (les tailles des particules des deux poudres originelles peuvent être du même ordre de grandeur ou bien franchement différentes).

La figure 6E illustre le cas d'une particule de poudre pré-alliée de type dispersée mais dont la matière est continue et obtenue à partir du malaxage intime de deux ou plusieurs particules de poudres originelles de taille bien différente et de composition chimique différente, comportant de préférence un alliage métallique ductile et des particules élémentaires dures, notamment des oxydes (matériaux ODS « Oxide Dispersion Strengthened » materials) : par exemple, on distingue les parties, respectivement claires et foncées, des deux poudres originelles dont les particules sont de composition homogène mais différente, les particules claires de la première poudre s'étant déformées plastiquement et s'étant liées maintes fois avec les particules dures et foncées de la deuxième poudre, pour former la particule de poudre pré-alliée de la figure 6E.

Dans ces deux derniers cas, il s'agit d'une technique de pré-alliage par broyage et malaxage mécanique intense à moyenne ou haute énergie demandant le plus souvent l'utilisation d'un broyeur planétaire.

La figure 6F illustre le cas d'une particule de poudre pré-alliée combinant les caractéristiques des particules de poudre des figures 6D et 6E : cette particule de poudre pré-alliée est de type dispersée mais dont la matière est continue et obtenue à partir du malaxage intime de trois poudres originelles de composition chimique différente, comportant deux poudres d'alliages métalliques ductiles : par exemple sur la figure 6F, on distingue la matrice blanche issue d'une ou plusieurs particules de grande dimension, les grosses parties foncées issues chacune d'une seule particule de dimension moyenne voire proche de celle de la première poudre et des particules élémentaires foncées de bien plus petite taille dures, notamment des oxydes.

La figure 6G illustre le cas d'une particule de poudre pré-alliée combinant les caractéristiques des particules de poudre des figures 6B et 6D : une première étape d'élaboration permet d'obtenir des particules de poudre pré-alliées comme celles de la figure 6D, à savoir de type dispersée mais dont la matière est continue et obtenue à partir du malaxage intime de deux ou plusieurs particules de poudres originelles de composition chimique différente, comportant de préférence des alliages métalliques ductiles, constitués de multi-éléments : il s'agit du cœur de la particule de la figure 6G. Une deuxième étape d'élaboration permet de former l'enveloppe continue, réalisée en un deuxième matériau de composition différente du premier matériau formant le cœur.

La figure 6H illustre le cas d'une particule de poudre pré-alliée combinant les caractéristiques des particules de poudre des figures 6D et 6C : une première étape d'élaboration permet d'obtenir des particules de poudre pré-alliées comme celles de la figure 6D, à savoir de type dispersée mais dont la matière est continue et obtenue à partir du malaxage intime de deux ou plusieurs particules de poudres originelles de composition chimique différente, comportant de préférence des alliages métalliques ductiles, constitués de multi-éléments : il s'agit du cœur de la particule de la figure 6H. Une deuxième étape d'élaboration permet de former l'enveloppe discontinue par incrustation de fines particules dures d'une deuxième poudre à la surface de particules ductiles de composition hétérogène de bien plus grande taille issues d'une première poudre pré-alliée comme celles de la figure 6D.

Dans les autres cas, illustrés sur les figures 6I et 6J, les « particules » de cette poudre unique sont multi-composantes, à savoir formées chacune de façon identique par plusieurs composants (ou particules élémentaires), de composition chimique différente, reliés entre eux par un liant organique ou non organique au sein d'une « macro-particule ». On parle encore de poudres composites. Dans ce cas, les particules sont formées de matière discontinue, de composition hétérogène et sont, selon l'invention, quasi-sphériques.

L'emploi d'un liant dans la synthèse de cette poudre agglomérée confère le caractère de matière discontinue aux agglomérats et justifie la dénomination de poudre à particules multi-composantes.

Dans certains cas, ce liant est supprimé après l'étape d'agglomération par l'emploi d'une étape de consolidation consistant à pyrolyser ou évaporer le liant en portant en température les poudres agglomérées.

Une telle « particule » de type « macro-particule » peut être obtenue par granulation comprenant une agglomération de composants ou particules élémentaires de différentes tailles, de formes et/ou de compositions chimiques en présence d'humidité suivie d'un séchage. L'élaboration de particules de poudres de type « macro-particule » par agglomération-séchage ou par pulvérisation-séchage d'une barbotine («*spray-drying* » en anglais) nécessite cependant de maîtriser les phases suivantes :
- la formulation de la barbotine, notamment le choix du solvant, du dispersant, du plastifiant et du liant (stabilité, homogénéité, comportement rhéologique et sédimentation),
- la pulvérisation de la barbotine et le séchage des gouttelettes (taille et distribution des gouttelettes, vitesse et mode de séchage) : cette granulation du mélange de particules élémentaires sous forme de suspension permet de la transformer par atomisation à basse température (dans un courant d'air ou de gaz inerte chaud) en des agglomérats sphériques de taille comparable, bien souvent supérieure à 50µm et dont la coulabilité est excellente,
- Une étape de consolidation des granules ainsi formées (traitement au four, à la flamme ou à la torche à plasma) peut être parfois envisagée si on désire des agglomérats plus denses et cohésifs. Qui plus est, le liant peut occasionner des problèmes lors de la fabrication additive à partir de poudres agglomérées non déliantées, d'où l'intérêt de supprimer ce liant. Le traitement au four permet de consolider la structure des granules sans en modifier les caractéristiques alors que le traitement à la flamme oxyacétylénique conduit à une fusion partielle, un frittage et une sphéroïdisation des granules modifiant leur morphologie.

Aussi, cette unique poudre est donc formée de « macro-particules », encore désignées sous le terme d'« agglomérats », d'« agrégats » ou encore de « granules », et constitue une poudre désignée sous le nom générique de « poudre composite » (« *engineered powders* » en anglais).

On obtient différents types de poudres composites ou poudres pré-alliées à particules multi-composantes telles que celles visibles sur les figures 6I et 6J.

Selon une possibilité avantageuse, la poudre utilisée est obtenue par granulation à partir d'une suspension encore appelée barbotine. La barbotine est une suspension aqueuse ou non-aqueuse de poudres fines constituées d'un mélange ou non de particules élémentaires différentes en forme, en composition et/ou en taille. Le solvant doit avoir un bas point d'ébullition et une faible viscosité. Il doit assurer la mise en solution du liant qui peut être organique ou non organique, celle du plastifiant et de différents ajouts tels que des défloculants ou dispersants et des agents de mouillage. En revanche, le solvant ne doit être ni soluble, ni réactif avec les particules élémentaires de la poudre composite. Bien qu'inflammables et toxiques, les solvants organiques restent encore largement utilisés en raison de leur faible viscosité, de leur faible tension de surface (γₗᵥ) favorisant le mouillage des particules élémentaires, de leur tension de vapeur élevée conduisant à un rapide séchage des granules. Néanmoins, les solvants aqueux commencent à prendre le pas sur des solvants organiques pour des raisons évidentes d'environnement et de coût. L'eau présente l'inconvénient majeur d'une faible vitesse d'évaporation. Après évaporation du solvant, le liant assure la cohésion mécanique entre particules élémentaires des granules, leur manipulation et leur transport. Généralement, un plastifiant qui est bien souvent un polymère de faible masse molaire est additionné au liant pour abaisser sa viscosité et réduire sa température de transition vitreuse (Tg). L'ajout de plastifiant comme son nom l'indique augmente la plasticité des granules.

Des « particules » formées de macro-particules de poudre composite obtenues par granulation sont visibles sur les figures 6I et 6J, il s'agit de granules constituées de composants ou particules élémentaires reliées essentiellement entre elles par un liant, par exemple des polymères hydrosolubles comme les polymères vinyliques, les polymères acryliques, les polyimines et polyoxydes, mais également des polymères en émulsion et des polymères d'origine naturelle.

Sur la figure 6I, il y a deux types de particules élémentaires ou composants élémentaires : des particules élémentaires métalliques ductiles claires, de différentes tailles et des composants élémentaires fragiles formés de fibres courtes foncées (ou « whiskers » en anglais). Bien souvent, il s'agit de fibres réfractaires de type céramique ou intermétallique, jouant le rôle de renfort pour accroître la tenue mécanique de la matrice métallique, dans la mesure où la fraction volumique de renfort est suffisamment importante. Ces composants élémentaires fragiles et réfractaires de type céramique et/ou intermétallique peuvent être également de forme équiaxe ou sphérique. Qui plus est, un mélange de particules élémentaires métalliques et de composants élémentaires réfractaires de forme variable peut être considéré.

Sur la figure 6J, il y a plusieurs particules élémentaires ou composants élémentaires de mêmes types, notamment métalliques mais parfois aussi céramiques ou intermétalliques, de différente taille, de forme et de composition chimique, à savoir dans le cas représenté trois particules élémentaires métalliques : des petites particules élémentaires claires (par exemple de l'aluminium), des particules élémentaires claires de plus grande dimension (par exemple du titane) et des particules élémentaires foncées ovoïdes (par exemple du niobium).

Pour la formation de ces poudres composites, on part en générale d'un mélange homogène de plusieurs types de particules (plusieurs poudres mono-élément et/ou multi-éléments, « élément » portant sur l'élément chimique) présentant une taille moyenne, une distribution de taille et une morphologie adaptées à la synthèse de macro-particules par des techniques de mélangeage et d'agglomération connues, au moyen d'un additif de liaison (par exemple un liant organique) et d'autres ajouts avec ou sans densification (ou consolidation) et sphéroïdisation. Il s'agit par ces techniques bien connues de la métallurgie des poudres d'obtenir une distribution homogène et relativement étroite des différentes poudres constitutives du mélange avec la composition moyenne initialement visée, une faible porosité et une morphologie sphérique des « particules » formées de ces dites macro-particules.

Les exemples précités en figures 6A à 6J concernent l'illustration de structure ou de constitution de particules de poudre rentrant dans le cadre de la présente invention et ne sont bien entendu pas limitatifs.

Ces différents procédés de pré-alliage d'un coût et propreté variables sont adaptés d'une part à la fraction volumique, surface spécifique, ductilité (ou dureté), température de fusion, réactivité, absorptivité de la radiation émise par le laser, densité (masse volumique) et à la nature des liaisons chimiques des différents composants élémentaires de la poudre et d'autre part à la composition chimique du liquide homogène obtenue par fusion partielle ou complète de cette dite poudre (on rappelle que car les poudres sont parfois constituées de particules dont les températures de fusion sont très différentes). Par ailleurs, selon l'invention, l'étendue de taille possible des macro-particules de la poudre composite (définie par d_{90%} - d_{10%} voire de préférence par d_{100%} - d_{0%}), rapportée à la valeur de diamètre moyen ou médian (d_{50%}) est faible afin de ne pas avoir trop d'écart de taille entre ces macro-particules ainsi que des granules trop grossières (d_{50%} voisin de 50µm).

En règle générale, selon l'invention et pour tout type de poudre décrite dans la présente demande, il faut s'assurer de disposer d'une répartition granulométrique relativement étroite des particules. Cependant pour la poudre composite, le procédé de granulation conduit à la répartition en taille de « particules » la plus étroite et à la poudre la plus grossière. Aussi, cette poudre composite agglomérée est plus adaptée au procédé DMD qu'au procédé SLM. Rappelons qu'en pratique une meilleure compacité du lit de poudre déposée sur le plateau de fabrication est obtenue en considérant une large distribution de taille de particules, accessible par une atomisation.

Selon l'invention, (d_{90%} - d_{50%}) /d_{50%} et (d_{50%} - d_{10%}) /d_{50%} sont deux bornes dont la première est inférieure ou égale à 0,66 (66%), voire inférieure ou égale à 0,33 (33%), et de préférence inférieure ou égale à 0,17 (17%), et la seconde est inférieure ou égale à 0,33 (33%), voire inférieure ou égale à 0,17 (17%), et de préférence inférieure ou égale à 0.08 (8%).

Toutefois, l'emploi de poudres composites (encore appelées granules, agrégats ou agglomérats) de composition souhaitée présentant une morphologie sphérique facilite grandement leur écoulement à travers le ou les distributeurs de poudres et à travers la buse dans le cas du procédé DMD ainsi que leur étalement homogène en un lit de poudre sur le plateau de fabrication dans le cas du procédé SLM. La granulation du mélange homogène de particules élémentaires de différentes poudres, pour former la poudre unique constituée de macro-particules, facilite par ailleurs sa manipulation, son transport et son stockage en évitant la ségrégation ou sédimentation des particules de différentes tailles et/ou de masses volumiques de ces différentes poudres (les particules les plus petites et/ou les plus lourdes ont tendance à s'écouler facilement à travers les interstices de l'édifice granulaire). Les techniques de granulation sont nombreuses dans la science de la métallurgie des poudres et sont bien connues de l'homme du métier.

L'emploi d'une poudre composite constituée de macro-particules permet d'envisager parmi les différentes poudres à mélanger une poudre composée de particules réfractaires, de préférence fines et en quantité modérée. Dans ce cas, la technique de fabrication de cette poudre composite demande à ce que le mélangeage de ces différentes poudres soit homogène avant qu'il soit suivi d'une technique de granulation appropriée. Cette technique permet dans ce cas non seulement d'éviter d'une part des problèmes de mise en couche et d'homogénéité du lit de poudre en SLM et d'autre part des problèmes d'écoulement à travers la buse, mais également prévient la dispersion (l'éparpillement) de ces fines particules à la sortie de la buse en DMD, et ce d'autant plus qu'elles sont peu denses (faible masse volumique), garantissant ainsi une composition répétable (ou reproductible) du bain liquide.

Il est en effet important que les particules des différentes poudres soient mélangées de façon homogène avant le procédé de granulation. A défaut, il peut en résulter des granules ou macro-particules de composition différente, ce qui se répercute sur la composition de la pièce finale qui est alors hétérogène. Le mélange est d'autant plus difficile à homogénéiser que la proportion volumique de l'une de ces poudres est faible par rapport aux autres (cas par exemple d'ajouts au mélange de terres rares comme éléments désoxydants ou d'éléments surfactants pour faciliter le mouillage entre solide et liquide).

D'autres techniques de pré-alliage relatives aux poudres mono-composantes existent telles que le « Splat Cooling » et le « Melt-Spinning » qui sont cependant des techniques beaucoup moins répandues dans l'industrie ou sont spécifiques à une classe de matériaux (en particulier aux alliages d'aluminium dans le cas présent).

Grâce à l'invention, le recours à une telle poudre pré-alliée par ces techniques, dans la droite ligne de l'atomisation, permet notamment de s'assurer de l'obtention d'une composition chimique homogène dans chaque particule et entre toutes les particules.

Ainsi, on peut réaliser une pièce au plus près des cotes de la pièce finale, et présentant les propriétés de résistance, notamment, de résistance mécanique, mais aussi de résistance à l'oxydation ou à la corrosion correspondant au niveau attendu pour l'application à laquelle la pièce est destinée.

De ce fait, il s'ensuit qu'il n'est plus systématiquement nécessaire de faire appel à des traitements thermiques ultérieurs d'homogénéisation (c'est-à-dire à des traitements à haute température), ce qui apporte une économie substantielle et évite à la pièce de se distordre. Aussi, dans la mesure où les matériaux à durcissement structural sont suffisamment trempés à la suite de ces procédés de fusion de particules par un faisceau de haute énergie, un traitement de précipitation de la phase durcissante à basse température (revenu) peut suffire.

La solution selon l'invention permet donc d'abaisser très fortement l'hétérogénéité de composition et de microstructure du matériau formant la pièce résultant du procédé de fabrication additive par fusion de particules de poudre au moyen d'un faisceau de haute énergie.

L'invention sera bien comprise et ses avantages apparaîtront mieux, à la lecture de la description détaillée qui suit, de modes de réalisation donnés à titre d'exemple non limitatif. La description se réfère aux dessins annexés sur lesquels :
- les figures 1 et 2, déjà décrites, sont des schémas explicatifs de deux procédés de fabrication additive par fusion de particules de poudre, connus et utilisés préférentiellement dans le cadre de la présente invention,
- la figure 3, déjà décrite, illustre la formation d'un film d'oxyde(s) qui se forme avec présence de porosités de gaz occlus lors de la fusion d'un alliage d'aluminium en présence de vapeur d'eau,
- les figures 4A, 4B et 4C, déjà décrites, sont des micrographies de faciès de rupture d'éprouvettes présentant des inclusions intermétalliques suite à la réaction d'un liquide riche en aluminium avec des particules réfractaires à base de fer ou de nickel qui jouent le rôle de compléments pour obtenir la composition souhaitée de l'alliage d'aluminium,
- la figure 5, déjà décrite, correspond à des micrographies représentant une pièce en acier renforcé par des particules en carbure de titane de plus faible masse volumique dont certaines n'ont pu être complètement mises en solution et n'ont pu être solidifiées sous formes de dendrites primaires, et
- les figures 6A à 6J, déjà décrites, représentent différentes poudres pré-alliées mono-composantes (aussi bien de composition homogène, figure 6A, que de composition hétérogène, figures 6B, 6C, 6D, 6E 6F, 6G et 6H) ou multi-composantes (encore appelées poudres composites, figures 6I à 6J) dont la constitution ou structure diffère selon les procédés de synthèse de ces poudres pré-alliées.

Afin de surmonter certains des inconvénients des procédés de fabrication additive de matériaux structuraux par fusion de particules de poudre, comme par exemple l'évaporation d'un élément chimique très volatil du bain, une microstructure inadaptée de la pièce par la taille et/ou la morphologie des phases et/ou des grains, une anisotropie marquée du matériau, la présence d'oxydes ou de précipités fragiles inopportuns, la présence de défauts..., il convient de considérer, selon l'un des procédés de synthèse de matériaux granulaires décrits dans la présente invention, une poudre pré-alliée mono-composante ou une poudre composite multi-composantes résultant d'un mélange et d'une agglomération de poudres, de composition moyenne différente de celle habituellement admise pour l'alliage avec lequel la pièce est réalisée, tout en conservant au mieux une poudre ou un mélange de poudres de morphologie sphérique.

Selon un premier mode de réalisation de l'invention, la poudre utilisée présente une composition enrichie en au moins un élément chimique de la composition dudit matériau formant la pièce résultant dudit procédé.

Il s'agit de rajouter dans la composition de l'alliage mère de la poudre une quantité suffisante de l'un ou plusieurs des éléments rentrant dans la composition dudit matériau formant la pièce finale, et ce pour compenser une perte naturelle d'une proportion de ces éléments pendant la mise en œuvre du procédé de fabrication additive par fusion de particules de poudre au moyen d'un faisceau de haute énergie. Dans ce cas précis, il s'agit d'une poudre pré-alliée mono-composante de composition homogène.

Dans ce cas, on considère une composition chimique moyenne de la poudre légèrement différente de celle du matériau, en particulier de l'alliage métallique, de la pièce issue du procédé selon l'invention car on doit compenser la perte d'une quantité d'un ou de plusieurs éléments chimiques au cours de la fabrication, notamment par évaporation. Cette évaporation est d'autant plus favorisée par l'emploi d'un procédé de fabrication additive sous vide, en particulier par fusion sélective par faisceau d'électrons, en anglais « Electron Beam Melting (EBM) », contrairement au procédé SLM dont l'enceinte de fabrication est généralement placée en surpression.

Cette perte naturelle peut résulter de l'évaporation particulièrement importante de ces éléments, après que les particules de poudre aient été portées à de très hautes températures, au-delà de leur fusion et/ou dans un vide poussé (10⁻⁵ à 10⁻⁶ mbar).

Selon cette première variante du premier mode de réalisation, ledit élément chimique ou un de ses oxydes est volatil à la température de mise en œuvre par ledit faisceau de haute énergie.

Dans le cas où la teneur en élément chimique volatil qui est perdue sous l'effet d'un faisceau de haute énergie reste faible, cet inconvénient est le plus souvent surmonté par l'emploi d'une poudre pré-alliée mono-composante, de composition homogène (poudre de la figure 6A), enrichie du dit élément volatil. Dans le cas d'une évaporation de plus grande ampleur, il convient - à défaut de pouvoir disposer industriellement d'une poudre pré-alliée mono-composante de composition homogène de par les limitations techniques connues à ce jour - de considérer une poudre pré-alliée mono-composante de composition hétérogène issue d'un revêtement (poudres des figures 6B et 6G) ou d'une incrustation de fines particules de poudre (poudres des figures 6C et 6H), dont la composition est constituée de l'élément chimique volatil.

Par exemple, ledit matériau est un alliage métallique qui est du Ti6Al4V et ledit élément volatil est de l'aluminium. Cet alliage Ti6AI4V ou TA6V est composé de titane, de 6% massique d'aluminium et de 4% massique de vanadium.

On considère préférentiellement un enrichissement de la poudre en aluminium qui est compris entre 0,15 et 3% massique par rapport à la composition de l'alliage en Ti6Al4V, et de préférence entre 0,15 et 1,5% massique.

Selon un autre exemple, ledit matériau est un alliage métallique à base d'aluminium et de lithium (notamment les alliages de composition massique 2,7%<Cu<4,3% - 0,8%<Li<1,6% - 0,25%<Ag<0,45% - 0,01%<Mn<0,45% - 0,3%<Mg<0,8% - Zn<0,63% - Si<0,12% - Fe<0,15% et le reste étant de l'Al) et ledit élément volatil est du lithium dont la quantité évaporée peut se monter de 0,1 à 0,5% massique.

Selon un autre exemple, ledit matériau est un alliage métallique à base de titane, de préférence du 6242 (soit Ti-6Al-2Sn-4Zr-2Mo-0,1Si en % massique), et ledit élément volatil dont on procure un enrichissement est Sn, cet enrichissement étant compris entre 0,15 et 1,5% massique par rapport à la composition de l'alliage.

Selon un autre exemple, ledit matériau est un alliage métallique à base d'aluminium, de préférence du 6061 dont les éléments d'alliage principaux sont le Mg et le Si, et ledit élément volatil dont on procure un enrichissement est Mg et/ou Cu, cet enrichissement étant compris entre 0,05 et 0,40 % massique par rapport à la composition de l'alliage pour le Cu et 0,05 à 1% massique pour le Mg.

Selon un autre exemple, ledit matériau est un intermétallique de type TiAI, de préférence du TiAI 48-2-2 (soit Ti-48Al-2Cr-2Nb en % atomique), et ledit élément volatil dont on procure un enrichissement est Al, cet enrichissement étant compris entre 0,15 et 3 % massique par rapport à la composition de l'intermétallique.

Selon un autre exemple, ledit matériau est un alliage métallique à base nickel, de type à durcissement par précipitation γ'- Ni₃(Al,Ti) et ledit élément volatil dont on procure un enrichissement est Al, cet enrichissement étant compris entre 0,05 et 3 % massique par rapport à la composition de l'alliage.

Selon un autre exemple, ledit matériau est un alliage métallique à base de fer et plus précisément un acier inoxydable martensitique à durcissement structural par le Cu, de préférence du 17-4PH (Z6CNU17-04 ou X5CrNiCuNb17-4 ou 1.4542) de composition massique C: 0.07% max, Mn: 1.00% max, P: 0.040% max, S: 0.03% max, Si: 1.00% max, Cr: entre 15.00 et 17.00%, Ni: entre 3.00 et 5.00%, Cu: entre 2.8 et 5.00%, Nb+Ta: entre 0.15 et 0.45% et le reste étant du Fe, et ledit élément volatil dont on procure un enrichissement est Cu cet enrichissement étant compris entre 0,15 et 3 % massique par rapport à la composition de l'alliage.

Selon un autre exemple, on peut mentionner l'alliage 15-5 PH qui est un acier inoxydable martensitique durci par précipitation (Z7CNU15-05 ou X5CrNiCuNb15-5 ou 1.4540) de composition massique C: 0.07% max, Mn: 1.00% max, P: 0.040% max, S: 0.03% max, Si: 1.00% max, Cr: entre 14.00 et 15.50%, Ni: entre 3.50 et 5.50%, Cu: entre 2.50 et 4.50%, Nb+Ta: entre 0.15 et 0.45% et le reste étant du Fe. Un enrichissement en Cu (quantité totale comprise entre 1500ppm et 2.5%), de cet élément susceptible de se volatiliser sous un faisceau de haute énergie, est à considérer afin de maintenir la fraction volumique souhaitée de phases durcissantes qui est fortement liée à la teneur en Cu. Mais étant donné que le 15-5 PH, obtenu par un procédé en voie liquide, est sensible à l'effet d'entaille suite à l'enrichissement en Cu de certains joints de grains formant des « caniveaux » en surface du matériau et de ce fait possède une forte tolérance aux défauts, il convient le plus souvent de ne pas réajuster la perte de Cu si le durcissement par précipitation de la pièce fabriquée par laser est suffisant pour l'application considérée.

Prenons un autre exemple concernant l'alliage de magnésium RZ5, qui est désigné selon la norme française AFNOR par GZ4TR et par ZE41 (ou Mg-Zn-RE-Zr) selon la norme ASTM. Sa composition massique est la suivante : Cu: <0.10%, Mn: <0.15%, Ni: <0.01%, Zn: entre 3.50 et 5.00%, Zr: entre 0.40 et 1.00%, Ce (terre rare): entre 0.75 et 1.75% et le reste étant du Mg.

On peut ajouter à cet alliage de magnésium RZ5 du zinc qui est un élément volatil dont la quantité évaporée peut se monter de 0,5 à 2,5% massique.

Selon un deuxième mode de réalisation de l'invention, la composition de la poudre utilisée présente au moins un élément chimique supplémentaire en quantité raisonnable (non nulle, notamment supérieure à 0,001% massique, soit 10 ppm ou encore 10 mg/kg mais inférieure à 0,5 % massique, soit 5000 ppm ou 5 g/kg) et apte à modifier la microstructure dudit matériau de la pièce résultante dudit procédé par rapport au cas où cet élément chimique supplémentaire est absent de la composition de la poudre.

Ceci est réalisé, quand cela est possible, par l'emploi d'une poudre pré-alliée mono-composante, de composition homogène (poudre de la figure 6A), enrichie du dit élément. Parfois, il convient de considérer une poudre pré-alliée mono-composante, de composition hétérogène issue d'un revêtement (poudres des figures 6B et 6G) ou d'une incrustation de fines particules de poudre (poudres des figures 6C et 6H), dont la composition est constituée du dit élément ajouté. Dans la mesure où les ajouts sont peu ductiles, comparativement à la poudre pré-alliée mono-composante, il sera privilégié un malaxage-broyage de cette poudre mono-composante avec les fines particules dures (poudres des figures 6E et 6F), dont la composition est constituée du dit élément ajouté.

Par ailleurs, il faut tenir compte du fait qu'une trop haute teneur en éléments modificateurs réduit la fluidité du bain et accroît la teneur en hydrogène dissous dans le bain s'accompagnant d'une porosité de gaz occlus à la solidification.

Dans ce cas, il s'agit d'un élément non nécessaire à titre d'élément rentrant dans la composition de l'alliage mère souhaité, mais présent uniquement pour modifier la microstructure du matériau et notamment de l'alliage métallique de la pièce finale de façon à remplir le cahier des charges tout en surmontant certaines spécificités du procédé, en particulier l'anisotropie microstructurale et la taille importante des grains.

Selon une première variante du deuxième mode de réalisation, ledit matériau est un alliage métallique et ledit élément chimique supplémentaire est apte à modifier la morphologie de la ou des phases métallurgiques dudit alliage métallique.

Par exemple, pour les alliages d'aluminium Al-Si hypo-eutectique il s'agit des éléments chimiques supplémentaires sodium (Na) et/ou strontium (Sr) et/ou calcium (Ca) et/ou antimoine (Sb) qui ont pour effet d'affiner la morphologie de l'eutectique lamellaire ou fibreux. Signalons que cet effet d'affinage de la microstructure eutectique qui accroît la ductilité de l'alliage est réduit par l'addition de l'élément phosphore (P) qui réagit avec les éléments modificateurs, et en particulier le sodium, pour former des phosphures. Aussi, la teneur en phosphore doit être maintenue à un niveau bas (<15 à 30 ppm). Rappelons qu'un autre moyen pour affiner la microstructure eutectique est d'employer des paramètres procédé permettant d'engendrer une haute vitesse de solidification qui d'ailleurs caractérise déjà ces procédés de fabrication rapide par fusion de particules de poudre au moyen d'un faisceau de haute énergie.

Selon une deuxième variante du deuxième mode de réalisation, ledit matériau est un alliage métallique et ledit élément chimique supplémentaire est apte à affiner la taille des grains dudit alliage métallique sans pour autant modifier systématiquement la morphologie des grains : il s'agit d'effectuer un affinage de la taille de grains par l'ajout d'inoculant.

Par exemple, il est bien connu que pour les alliages d'aluminium la structure équiaxe à grains fins offre la meilleure combinaison de résistance et de ductilité. La morphologie et la taille des grains formés après solidification du bain sont déterminées par la composition de l'alliage, la vitesse de solidification et l'addition en faible quantité d'éléments chimiques supplémentaires dits « affineurs », en particulier titane et bore sous forme de sels de Ti, de B ou de Ti-B ou encore d'alliages Al-Ti, Al-B ou Al-Ti-B. Ces éléments chimiques affineurs forment, au contact de l'aluminium liquide, des composés intermétalliques à haut point de fusion qui constituent des sites de germination hétérogène de grains et accroissent le nombre de grains. D'autres inoculants comme le Nb, le Zr et le Cu-P (où l'élément phosphore agit en particulier sur la germination de Si) sont utilisés également pour l'affinage des alliages d'aluminium. L'ajout en faible quantité (10 à 5000 ppm) de Ti et/ou de Zr dans les alliages d'aluminium, conduisant à la formation d'intermétalliques TiAl₃ et ZrAl₃, réduit la fissuration à chaud lors de la solidification de ces alliages d'aluminium en affinant leur grain.

Par exemple, ledit alliage métallique mère est un alliage à base d'aluminium du type AlSi10Mg proche de l'alliage 43000 selon la norme NF EN 1706 ou soit encore proche de l'alliage A360 selon l'« Aluminium Association » aux USA. Cet alliage est composé d'aluminium, de 9,5% massique de silicium, de 0,5% massique de magnésium et de 1,3% massique de fer et ledit élément est du titane et/ou du bore et/ou du zirconium (de préférence 100 à 300 ppm de Ti, et/ou 20 à 50 ppm de B et/ou 100 à 500 ppm de Zr).

Ces trois éléments peuvent être introduits dans l'alliage mère sous la forme d'un alliage binaire Al-Ti ou Al-Zr contenant de 3 à 10% massique de Ti ou de Zr, ou bien encore sous forme d'un alliage ternaire AI-Ti-B ou AI-Zr-B constitué du dit même alliage binaire Al-Ti ou Al-Zr avec en plus 0,2 à 1 % massique de B. L'introduction directe de particules de TiB₂ ou de ZrB₂ dans l'alliage mère riche en aluminium est à écarter en raison de son haut point de fusion rendant délicate leur dissolution et ce d'autant plus que les particules sont grosses. Aussi par l'introduction de ces alliages dans l'alliage d'aluminium, des aluminures (essentiellement TiAl₃ ou ZrAl₃) et des borures (essentiellement TiB₂ ou ZrB₂ et parfois AlB₂) se forment avec une taille, une morphologie et une distribution qui vont bien, pour constituer des sites de germination hétérogène des grains d'aluminium.

Ainsi, de préférence, le titane et/ou le bore sont deux éléments chimiques qui sont introduits, seuls ou ensemble, de préférence sous-forme d'alliages binaires (Al-Ti) ou (Al-B) ou ternaire (Al-Ti-B) à bas point de fusion, proche de celui de l'alliage à base d'aluminium.

Pour d'autres types d'alliages autres que les alliages d'aluminium, par exemple ledit alliage métallique mère est un alliage à base de titane qui est du Ti6AI4V ou TA6V et ledit élément chimique supplémentaire ou élément affineur est du bore (10 à 5000 ppm de B) ou des borures de type TiB₂ (10 à 5000 ppm de TiB₂).

De préférence, ces éléments chimiques (B ou TiB₂) sont introduits sous la forme de fines particules élémentaires par incrustation (revêtement discontinu comme dans le cas de la figure 6C) et/ou par malaxage (comme dans le cas de la figure 6E).

On peut ajouter à l'alliage de magnésium RZ5 précité, soit du Ca et/ou du Zr qui, en faible quantité (total compris entre 10 à 5000 ppm), peuvent avoir un effet bénéfique sur l'affinage du grain.

Selon d'autres exemples, pour des alliages à base Ti, Fe, Al ou Ni, l'enrichissement en éléments chimiques supplémentaires dits «affineurs» comprend l'un ou plusieurs éléments chimiques parmi C, B, N, TiC, TiN, TiB₂, Fe₃C et FeSi, pour un ajout total compris entre 50 et 5000ppm.

Selon une troisième variante du deuxième mode de réalisation, ledit élément est apte à désoxyder le bain dudit alliage métallique.

Par exemple ledit alliage métallique est un alliage à base de fer qui est de préférence du 16NCD13, du 32CDV13 ou du 15CDV6 et ledit élément chimique supplémentaire ou élément désoxydant est du titane introduit sous la forme de particules de TiC et/ou de TiB₂ (moins de 1% en volume, de préférence 50 à 5000 ppm de TiC et/ou de TiB₂ et de préférence de 50 à 500 ppm de TiC et/ou de TiB₂).

Selon d'autres exemples, l'ajout de terres rares dans la synthèse de composites à matrice métallique (CMM) ou de matériaux avides d'oxygène a pour effet de limiter l'oxygène dissous dans le bain liquide au cours de la fabrication additive. Les terres rares les plus usités sont le Scandium (Sc), le Néodyne (Nd), l'Yttrium (Y) et le Lanthane (La). Ils ont la particularité de fixer l'oxygène dissous sous forme d'oxydes, lesquels oxydes sont chimiquement stables vis-à-vis de la matrice de CMM et de matériaux avides d'oxygène. Dans le but d'une réduction de coûts et d'une meilleure efficacité de désoxydation du bain liquide, il convient, le plus souvent, d'introduire les terres rares dans la synthèse des poudres sous forme d'hexaborures de fine taille de type RB₆ (NdB₆, YB₆, LaB₆, ScB₆), lesquels sont susceptibles de former des borures (affineurs) en plus de piéger l'oxygène dissous du bain liquide en formant des oxydes.

Ainsi, de préférence, ledit élément chimique supplémentaire est ajouté par addition de fines particules de TiC, de TiB₂ et/ou d'hexaborures de terres rares pour les alliages à base Ti, Fe et Al.

Selon un autre exemple, on peut venir enrichir de 50 à 5000ppm l'alliage de magnésium RZ5 précité en terres rares qui en plus de jouer le rôle de désoxydant du bain, permettent d'accroître la résistance à la corrosion galvanique et permettent de réduire la microporosité et la fissuration à la solidification du bain liquide.

Selon une quatrième variante du deuxième mode de réalisation, concernant les particules d'une poudre composite présentant des renforts, de préférence discontinus de forme élancée (fibres) ou équiaxe (particules), (poudre de la figure 6I), ledit élément chimique supplémentaire (agent tensio-actif ou surfactant) est apte à faciliter le mouillage des renforts (discontinus) par le liquide formé par la fusion d'une partie des particules de la poudre composite au moyen d'un faisceau de haute énergie : en particulier il s'agit de la fusion par le faisceau de haute énergie des autres particules élémentaires métalliques de la poudre composite.

Par exemple, pour les composites à matrice à base d'aluminium renforcée par des particules de SiC, l'élément Mg dissous accroît le mouillage du SiC par l'aluminium liquide alors que l'élément Cu le diminue.

L'ajout de Si en faible quantité (50 à 5000ppm) permet de contrôler la teneur en Fe du bain liquide riche en aluminium et abaisse quelque peu sa température de fusion, améliorant ainsi la mouillabilité du liquide vis-à-vis du renfort SiC.

On constate avec les éléments Cu et Si (quantité totale comprise entre 50 à 5000ppm) le même effet vis-à-vis du mouillage des renforts SiC dans les alliages de magnésium.

Selon une cinquième variante du deuxième mode de réalisation, ledit élément est apte à améliorer l'absorptivité de la radiation fournie par le faisceau de haute énergie de façon à faciliter d'une part la densification par frittage si la compacité du lit de poudre est suffisamment importante (cas du procédé SLS) ou d'autre part la fusion des poudres (cas des procédés SLM et DMD) du matériau considéré.

Par exemple, ledit matériau est une céramique quasi transparente à la radiation du faisceau de haute énergie, de préférence des oxydes (Al₂O₃, SiO₂, ZrO₂, Y₂O₃, MgO, TiO₂...) ou mélanges de plusieurs oxydes (Al₂O₃-SiO₂, Al₂O₃-ZrO₂, ZrO₂-Y₂O₃, Al₂O₃-SiO₂-Y₂O₃...) dont certains peuvent jouer le rôle de fondant (diminution de la température de solidus du mélange par la formation d'une faible quantité de liquide à bas point de fusion facilitant la densification et consolidation du matériau lors de sa fabrication additive), et le dit élément est du carbone - ou tout autre élément absorbant vis-à-vis de la longueur d'onde du laser utilisée - introduit de préférence sous la forme d'un revêtement continu (50 à 5000 ppm de carbone ou de ses dérivés et de préférence de 100 à 1000 ppm de carbone) d'une poudre atomisée ou centrifugée (poudre de la figure 6B) ou bien encore agglomérée puis densifiée (Il s'agit d'une poudre comme celle de la figure 6J, qui est de plus revêtue après qu'elle ait été densifiée à la flamme ou au four pour éliminer complètement le liant).

Selon une sixième variante du deuxième mode de réalisation, ledit élément ou composé chimique supplémentaire est apte à renforcer l'alliage métallique d'un point de vue mécanique pour application haute température: en particulier, on utilise ledit composé chimique supplémentaire avec une fraction volumique suffisamment importante, comprise entre 3 et 30% en volume, ainsi qu'une taille suffisamment fine et une distribution suffisamment homogène, toutes les deux proches de celles des particules élémentaires métalliques de la poudre composite présentée en figure 6J.

Pour les aciers 16NCD13, 32CDV13, 15CDV6..., les composés FeAl, TiC et bien d'autres peuvent jouer le rôle de renforts. La résistance spécifique de ces composites à matrice métallique (CMM) et leur tenue en température se trouvent nécessairement améliorées par rapport aux matériaux non renforcés. Toutefois, leur ductilité est réduite et demande une optimisation de la fraction volumique des renforts de façon à limiter cette baisse de ductilité.

Selon un autre exemple, les alliages de titane comme par exemple le TA6V peuvent être renforcés par des ajouts de TiB et/ou de TiC avec une fraction volumique de ces renforts qui, de préférence, ne dépasse pas 15% en volume. Ces ajouts peuvent être obtenus en faisant réagir l'alliage de titane avec le renfort B₄C.

Il est envisagé l'incorporation de renforts SiC dans les alliages d'aluminium de la série 5000 et des renforts Al₂O₃ dans les alliages d'aluminium de la série 6000. L'introduction de renforts SiC dans les alliages de magnésium est également envisagée.

## Revendications

1. Procédé de fabrication de pièces en matériau céramique, en composite à matrice céramique ou en composite à matrice métallique à renfort discontinu, notamment à renfort céramique ou intermétallique, par fusion ou frittage de particules de poudre(s) au moyen d'un faisceau de haute énergie, dans lequel que la poudre utilisée est une unique poudre, chaque particule de poudre présentant une composition moyenne sensiblement identique, la composition de la poudre utilisée présentant au moins un élément chimique supplémentaire en quantité non nulle mais inférieure à 0,5% massique, soit 5000ppm ou 5g/kg et apte à modifier la microstructure dudit matériau de la pièce résultante dudit procédé par rapport au cas où cet élément chimique supplémentaire est absent de la composition de la poudre, et dans lequel ledit élément chimique supplémentaire est apte à améliorer l'absorptivité dudit matériau céramique vis-à-vis de la radiation émise par le faisceau de haute énergie.

2. Procédé selon la revendication 1, dans lequel les particules de poudre présentent une sphéricité comprise entre 0,8 et 1,0 et un facteur de forme compris entre 1 et √2.

3. Procédé selon la revendication 1 ou 2, dans lequel la répartition granulométrique des particules de ladite poudre est resserrée autour de la valeur de diamètre moyen d_{50%} de sorte que :(d_{90%} - d_{50%})/d_{50%}≤ 0,66 et (d_{50%} - d_{10%})/ d_{50%}≤ 0,33 avec (d_{90%} - d_{10%})/d_{50%}≤ 1,00, et de préférence de sorte que : (d_{90%} - d_{10%})/d_{50%}≤0,50 avec (d_{90%} - d_{50%})/d_{50%}≤ 0,33 et (d_{50%} - d_{10%})/d_{50%}≤ 0,17.

4. Procédé selon l'une quelconque des revendications 1 à 3, dans lequel le matériau est une céramique quasi-transparente à la radiation du faisceau de haute énergie, de préférence un oxyde tel que Al₂O₃, SiO₂, ZrO₂, Y₂O₃, MgO, TiO₂ ou un mélange de plusieurs oxydes tel que Al₂O₃-SiO₂, Al₂O₃-ZrO₂, ZrO₂-Y₂O₃, Al₂O₃-SiO₂-Y₂O₃.

5. Procédé selon l'une quelconque des revendications 1 à 4, dans lequel l'élément chimique supplémentaire est du carbone ou un de ses dérivés.

6. Procédé selon la revendication 5, dans lequel l'élément chimique supplémentaire est introduit sous la forme d'un revêtement continu.

7. Procédé selon l'une quelconque des revendications 1 à 6, dans lequel la poudre utilisée est obtenue par atomisation ou par centrifugation d'un alliage mère.

8. Procédé selon l'une quelconque des revendications 1 à 6, dans lequel la poudre utilisée est obtenue par enrobage (revêtement continu) ou incrustation (revêtement discontinu).

9. Procédé selon l'une quelconque des revendications 1 à 6, dans lequel la poudre utilisée est obtenue par broyage/malaxage.

10. Procédé selon l'une quelconque des revendications 1 à 6, dans lequel la poudre utilisée est obtenue par granulation à partir d'une suspension encore appelée barbotine.

11. Procédé selon l'une quelconque des revendications précédentes, dans lequel la poudre utilisée présente une composition enrichie en au moins un élément chimique de la composition dudit matériau formant la pièce résultant dudit procédé.

12. Procédé selon la revendication 11, dans lequel ledit élément chimique, ou un de ses oxydes, est volatil à la température de mise en œuvre par ledit faisceau de haute énergie.

13. Procédé selon la revendication 12, dans lequel ledit matériau est l'alliage métallique Ti6AI4V et en ce que ledit élément chimique volatil est de l'aluminium.

14. Procédé selon la revendication 13, dans lequel ledit enrichissement de la poudre en aluminium est compris entre 0,15 et 3 % massique par rapport à la composition de l'alliage en Ti6Al4V.

15. Procédé selon la revendication 12, dans lequel ledit matériau est un alliage métallique à base d'aluminium et de lithium et en ce que ledit élément chimique volatil est du lithium.
